# EUROPÄISCHE PATENTSCHRIFT

(11) **EP 2 141 791 B1**
(45) Veröffentlichungstag und Bekanntmachung des Hinweises auf die Patenterteilung: **18.07.2012**
(21) Anmeldenummer: 09100347.5
(22) Anmeldetag: 26.06.2009
(51) Int. Cl.: H02P 23/00, H02P 27/06, H02P 27/08, H02M 5/458, H02M 7/493

(54) **Verfahren und Vorrichtung zum Betreiben einer Asynchronmaschine**
Method and device for operating an induction machine
Procédé et dispositif destinés au fonctionnement d'une machine asynchrone

(30) Priorität: 02.07.2008 DE 102008031268
(43) Veröffentlichungstag der Anmeldung: 06.01.2010
(73) Patentinhaber: Continental Automotive GmbH, 30165 Hannover (DE)
(72) Erfinder: Götzenberger, Martin, 85051 Ingolstadt (DE); Bolz, Stephan, 93102 Pfatter (DE)

(56) Entgegenhaltungen:
- EP-A- 1 521 356
- EP-A- 1 914 108
- US-A1- 2005 225 270

## Beschreibung

Die Erfindung betrifft ein Verfahren und eine Vorrichtung zum Betreiben einer Asynchronmaschine. Die Asynchronmaschine weist einen Rotor und zumindest zwei elektrisch getrennte Statorwicklungen auf. Der ersten und der zweiten Statorwicklung sind jeweils mehrere Wicklungsstränge zugeordnet. Die erste Statorwicklung wird über einen ersten Teilumrichter und die zweite Statorwicklung wird über einen zweiten Teilumrichter gespeist.

Asynchronmaschinen finden Einsatz im Bereich der Automobiltechnik, wo sie beispielsweise innerhalb eines Ventilators eines Lüftungssystems für eine Innenraumbelüftung eines Kraftfahrzeugs eingesetzt werden. Asynchronmaschinen können beispielsweise als Kurzschlussläufer-Asynchronmaschine ausgebildet sein. Bei derartigen Asynchronmaschinen sind die Rotorwicklungen elektrisch kurzgeschlossen.

Steuervorrichtungen, die ausgebildet sind zum Steuern der Asynchronmaschine, umfassen häufig einen Wechselrichter und können so eingangsseitig mit einem Gleichstrom und einer Gleichspannung beaufschlagt werden. Dies ist insbesondere bei dem Einsatz in einem Kraftfahrzeug von Vorteil, bei dem das Bordnetz eine Gleichspannung und einen Gleichstrom zur Verfügung stellt.

EP 0 840 441 B1 offenbart eine Steuerung für eine Asynchronmaschine. Die Asynchronmaschine wird mittels einer feldorientierten Stromregelung in ihrer Drehzahl geregelt. Dazu werden Transformationen der Ströme und Spannungen in ein mit dem Rotor umlaufendes Koordinatensystem, ein d,q-Koordinatensystem, durchgeführt. Bei dem d,q-Koordinatensystem fällt die d-Achse mit der Orientierung der jeweiligen Pole des Rotors zusammen, während die q-Achse senkrecht auf der d-Achse steht. Die d-Achse wird auch als reelle Achse und die q-Achse als imaginäre Achse bezeichnet.

DE 10 2005 043 576 A1 offenbart eine elektrische Maschine, die zumindest zwei elektrisch getrennte Statorwicklungen aufweist. Die erste Statorwicklung wird mittels eines ersten Teilumrichters gespeist und die zweite Statorwicklung wird mittels eines zweiten Teilumrichters gespeist.

Die EP 1 914 108 A1 offenbart zwei Motorgeneratoren, die über eine Achse miteinander verbunden sind, wobei der erste Motorgenerator als durch eine Verbrennungsmaschine betriebener Generator oder als Starter für die Verbrennungsmaschine und der zweite Motorgenerator als elektrischer Antrieb oder als Bremskraft unterstützender Generator fungiert.

Die US 2005/0225270 A1 offenbart den Betrieb mehrerer Motoren aus einer Gleichspannungsquelle mit einem Zwischenkreiskondensator, wobei die Motoren verschachtelt angesteuert werden, um eine Welligkeit des Kondensatorstroms zu verringern.

Die EP 1 521 356 A2 offenbart einen Wechselstrommotor mit zwei Wicklungen, die aus einer Gleichstromquelle mit nachgeschalteten Umrichtern gespeist werden, wobei die Umrichter über einen Datenbus miteinander verbunden sind, um gleichmäßig verteilte Ströme zu ermöglichen.

Die Aufgabe, die der Erfindung zugrunde liegt, ist es, ein Verfahren und eine Vorrichtung zum Betreiben einer Asynchronmaschine zu schaffen, das bzw. die eine möglichst geringe Belastung des Zwischenkreiskondensators gewährleistet.

Die Aufgabe wird gelöst durch die Merkmale der unabhängigen Patentansprüche. Eine vorteilhafte Ausgestaltung der Erfindung ist im Unteranspruch gekennzeichnet.

Die Erfindung zeichnet sich aus durch ein Verfahren und eine korrespondierende Vorrichtung zum Betreiben einer Asynchronmaschine mit einem Rotor und zumindest zwei elektrisch getrennten Statorwicklungen. Der ersten und zweiten Statorwicklung sind jeweils mehrere Wicklungsstränge zugeordnet. Die erste Statorwicklung wird über einen ersten Teilumrichter und die zweite Statorwicklung wird über einen zweiten Teilumrichter gespeist. Der erste und zweite Teilumrichter werden aus einem gemeinsamen Zwischenkreis, der einen Zwischenkreiskondensator aufweist, mit einer Zwischenkreisspannung beaufschlagt. Ein Wert der Zwischenkreisspannung wird erfasst. Abhängig von dem erfassten Wert der Zwischenkreisspannung und einem Sollwert zumindest einer Betriebsgröße der Asynchronmaschine wird ein erster Modulationsgrad ermittelt. Abhängig von dem ermittelten ersten Modulationsgrad wird ein zweiter Modulationsgrad ermittelt. Der erste und zweite Teilumrichter werden derart angesteuert, dass aus der Ansteuerung der zweite Modulationsgrad resultiert. Dabei wird der zweite Modulationsgrad derart ermittelt, dass er während der Ansteuerung der Asynchronmaschine im Hinblick auf einen geringen Effektivwert eines Zwischenkreisstromes, der von dem Zwischenkreis dem ersten und zweiten Teilumrichter zur Verfügung gestellt wird, optimiert ist und zwar unter Berücksichtigung einer Nebenbedingung, dass ein Istwert der zumindest einen Betriebsgröße im Wesentlichen gleich dem Sollwert der zumindest einen Betriebsgröße ist. Dies hat den Vorteil, dass ein Effektivwert des Zwischenkreisstromes besonders gering ist. Dadurch ist auch ein Kondensatorstrom, der von dem Zwischenkreiskondensator zur Verfügung gestellt wird, besonders gering. Dies ermöglicht die Verwendung von Kondensatoren mit besonders kleinen Kapazitäten und somit mit geringerer Bauteilgröße. Der zweite Modulationsgrad wird beispielsweise unter zur Hilfenahme einer vorgegebenen Tabelle und/oder eines vorgegebenen Kennfeldes ermittelt und zwar derart, dass aus der Ansteuerung einer derartigen Asynchronmaschine basierend auf dem zweiten Modulationsgrad ein Effektivwert des Zwischenkreisstromes resultiert, der möglichst gering, insbesondere minimal, ist. Dabei berücksichtigen die Daten in der vorgegebenen Tabelle und/oder in dem vorgegebenen Kennfeld, dass der möglichst geringe Effektivwert des Zwischenkreisstromes einen vorgegebenen Betriebszustand der Asynchronmaschine gewährleistet. Die Daten der vorgegebenen Tabelle und/oder des vorgegebenen Kennfeldes werden beispielsweise mittels Simulation ermittelt. Der vorgegebene Betriebszustand wird erreicht, wenn der Istwert der zumindest einen Betriebsgröße, so z.B. ein Drehmoment und/oder eine Drehzahl, im Wesentlichen gleich seinem Sollwert ist. Dabei ist eine Gleichheit von Ist- und Sollwert bevorzugt während eines stationären Betriebszustandes der Asynchronmaschine gegeben, während bei einem dynamischen Betriebszustand, so z.B. während einer Drehzahlerhöhung, der Istwert von dem Sollwert abweichen kann. Diese sich abweichenden Ist- und Sollwerte können aber im Hinblick auf den dynamischen Betriebszustand der Asynchronmaschine als im Wesentlichen gleich bezeichnet werden.

Erfindungsgemäß wird abhängig von dem ermittelten zweiten Modulationsgrad ein Sollwert eines magnetischen Flusses ermittelt, der der Asynchronmaschine vorgegeben wird. Insbesondere im Hinblick auf eine feldorientierte Regelung der Asynchronmaschine, wird vorzugsweise aus dem ermittelten magnetischen Fluss ein drehfeldbildender Motorstrom ermittelt. Der drehfeldbildende Motorstrom hat vorzugsweise auch einen Einfluss auf die Ermittlung eines drehmomentbildenden Motorstroms, um den vorgegebenen Betriebszustand der Asynchronmaschine zu gewährleisten. Dadurch sind ein besonders zuverlässiger Betrieb der Asynchronmaschine und gleichzeitig eine geringe Belastung des Zwischenkreiskondensators gewährleistet.

In einer vorteilhaften Ausgestaltung wird abhängig von einem zuvor ermittelten zweiten Modulationsgrad der zweite Modulationsgrad ermittelt. Die Berücksichtigung des zuvor ermittelten zweiten Modulationsgrades ermöglicht auf besonders einfache Weise eine Ermittlung des zweiten Modulationsgrades unter Berücksichtigung einer Hysterese. Sind beispielsweise einem Wert des ersten Modulationsgrads ein möglicher erster und zweiter Wert des zweiten Modulationsgrades zugeordnet, so kann eine abwechselnde Vorgabe des zur Auswahl stehenden ersten oder zweiten Wertes des zweiten Modulationsgrades dadurch vermieden werden, dass der zweite Modulationsgrad abhängig von dem zuvor ermittelten zweiten Modulationsgrad ermittelt wird. Dabei wird vorzugsweise derjenige zur Auswahl stehende Wert des zweiten Modulationsgrades ausgewählt, der eine geringere Differenz zu dem Wert des zuvor ermittelten zweiten Modulationsgrades aufweist. Ist ein zweiter Modulationsgrad ermittelt, so wird dieser während einer nachfolgenden Ermittlung eines neuen zweiten Modulationsgrades als zuvor ermittelter zweiter Modulationsgrad berücksichtigt.

Ausführungsbeispiele der Erfindung sind im Folgenden anhand der schematischen Zeichnungen näher erläutert. Es zeigen:
- Figur 1: eine schematische Darstellung einer Asynchron- maschine mit mehreren Statorwicklungen,
- Figur 2: eine schematische Darstellung einer Betriebs- vorrichtung,
- Figur 3: eine schematische Darstellung einer Sinus- Dreieck-Modulation,
- Figur 4a-4b: verschiedene Verläufe eines Zwischenkreisstro- mes,
- Figur 5a-5b: verschiedene Kennlinien der Asynchronmaschine,
- Figur 6: ein Ablaufdiagramm,
- Figur 7: eine schematische Darstellung einer weiteren Betriebsvorrichtung.

Elemente gleicher Konstruktion oder Funktion sind figurenübergreifend mit den gleichen Bezugszeichen gekennzeichnet.

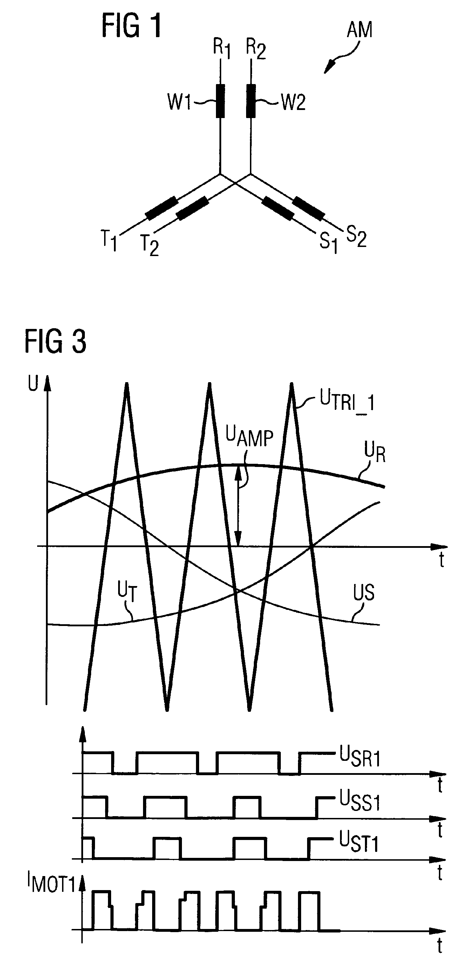

In Figur 1 ist schematisch eine Asynchronmaschine AM dargestellt. Die Asynchronmaschine AM umfasst einen Rotor und eine erste und eine zweite Statorwicklung W1 und W2. Die erste und zweite Statorwicklung W1 und W2 sind elektrisch voneinander getrennt. Die erste Statorwicklung W1 realisiert einen ersten Teilmotor und die zweite Statorwicklung W2 realisiert einen zweiten Teilmotor der Asynchronmaschine AM. Grundsätzlich kann die Asynchronmaschine AM auch mehr als zwei Statorwicklungen aufweisen. Die erste und zweite Statorwicklung W1 und W2 weisen vorzugsweise jeweils drei Wicklungsstränge auf, die jeweils resultierend um 120° versetzt angeordnet sind. Der ersten Statorwicklung W1 sind die ersten elektrischen Wicklungsanschlüsse R1, S1, T2 zugeordnet und der zweiten Statorwicklung W2 sind die zweiten elektrischen Wicklungsanschlüsse R2, S2, T2 zugeordnet.

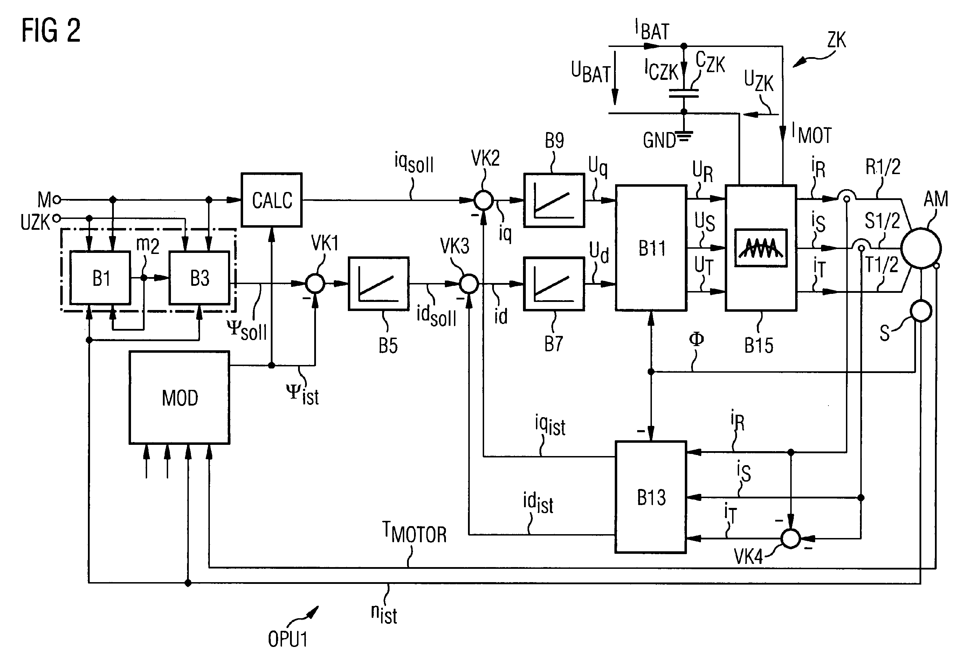

Einer Betriebsvorrichtung OPU1 (Figur 2) ist die Asynchronmaschine AM zugeordnet. Die Betriebsvorrichtung OPU1 umfasst eine Regleranordnung, die ausgebildet ist, eine feldorientierte Stromregelung zu realisieren. Dazu erfolgt eine Transformation der Ströme und Spannungen der Asynchronmaschine AM in ein mit dem Rotor umlaufendes Koordinatensystem, ein d,q-Koordinatensystem. Diese Transformation wird als Clarke-Park-Transformation bezeichnet. Regelgrößen können hierbei beispielsweise ein Drehmoment M der Asynchronmaschine AM sein. Die Betriebsvorrichtung OPU1 kann als Vorrichtung zum Betreiben der Asynchronmaschine AM bezeichnet werden.

Als Sollwert einer Betriebsgröße wird das Drehmoment M vorgegeben. Die Betriebsvorrichtung OPU1 umfasst eine Berechnungseinheit CALC, die ausgebildet ist, abhängig von dem Sollwert des Drehmoments M und einem Ist-Fluss *Ψᵢₛₜ* einen Sollwert iq-Soll einer drehmomentbildenden Stromkomponente iq des d,q-Koordinatensystems zu ermitteln. Der drehmomentbildende Strom iq kann auch als q-Motorstrom bezeichnet werden.

Ferner weist die Betriebsvorrichtung OPU1 einen Block MOD auf, der ausgebildet ist, den Ist-Fluss *Ψ*ᵢₛₜ ausgangsseitig zur Verfügung zustellen. Dabei wird mittels des Blocks MOD unter zur Hilfenahme eines magnetischen Flussmodells der Asynchronmaschine AM abhängig von einer Istdrehzahl nᵢₛₜ des Rotors der Asynchronmaschine AM und einer Temperatur T_{MOTOR}, die beispielsweise mittels eines Temperatursensors in dem Stator der Asynchronmaschine AM erfasst wird, der Ist-Fluss *Ψᵢₛₜ* ermittelt. Die Istdrehzahl nᵢₛₜ wird beispielsweise mittels eines Positionssensors S ermittelt, der ausgebildet ist, einen Drehwinkel Φ des Rotors der Asynchronmaschine AM bezogen auf eine vorgegebene Bezugsmarke auf dem Stator zu erfassen und zur Verfügung zustellen und abhängig von dem Drehwinkel Φ die Istdrehzahl nᵢₛₜ zu ermitteln. Der Positionsgeber S kann beispielsweise als Resolver ausgebildet sein. Er kann jedoch auch beispielsweise ein inkrementeller Positionsgeber umfassend ein Hallelement oder dergleichen sein.

Ein Verknüpfungspunkt VK2 ist in der Betriebsvorrichtung OPU1 vorgesehen, in dem eine Differenz zwischen dem Sollwert iqₛₒₗₗ und einem Istwert iqᵢₛₜ des q-Motorstroms gebildet wird, wobei diese Differenz dann als Regeldifferenz einem Block B9 zugeführt ist, der einen q-Regler umfasst. Der q-Regler kann beispielsweise als PI-Regler ausgebildet sein. Ausgangsseitig erzeugt der q-Regler einen Wert Uq einer q-Spannung, die als Stellsignal einem Block B11 zugeführt ist.

Ferner ist ein Wert einer Zwischenkreisspannung U_{ZK} eines Zwischenkreises ZK eingangsseitig der Betriebsvorrichtung OPU1 vorgegeben. Der Zwischenkreis ZK ist beispielsweise mit einem elektrischem Bordnetz eines Kraftfahrzeugs elektrisch gekoppelt und weist einen Zwischenkreiskondensator C_{ZK} auf, der elektrisch parallel zu einer Bordnetzspannungsversorgung angeordnet ist, die beispielsweise als eine Batterie des Kraftfahrzeugs ausgebildet ist und dem Zwischenkreis ZK eine Versorgungsspannung U_{BAT} zur Verfügung stellt. Über dem Zwischenkreiskondensator C_{ZK} fällt die Zwischenkreisspannung U_{ZK} ab.

Die Asynchronmaschine AM wird mittels eines ersten und zweiten Teilumrichters angesteuert, die in Figur 2 in einem Stellglied B15 integriert sind. Der erste Teilumrichter des Stellgliedes B15 ist elektrisch gekoppelt mit den ersten Wicklungsanschlüssen R1, S1, T1 der ersten Statorwicklung W1. Der zweite Teilumrichter des Stellgliedes B15 ist elektrisch gekoppelt mit den zweiten Wicklungsanschlüssen R2, S2, T2 der zweiten Statorwicklung W2. Der erste und zweite Teilumrichter sind beispielsweise als Dreiphasen-Wechselrichter ausgebildet und versorgen die Asynchronmaschine AM mit den gewünschten Leiterspannungen. Dem Stellglied B15 ist eingangsseitig der Zwischenkreis ZK zugeordnet. Der Zwischenkreis ZK beaufschlagt den ersten und zweiten Teilumrichter des Stellgliedes B15 mit der Zwischenkreisspannung U_{ZK}.

Die Betriebsvorrichtung OPU1 umfasst ferner eine erste und eine zweite Ermittlungseinheit B1 und B3, denen eingangsseitig die Zwischenkreisspannung U_{ZK}, der Sollwert des Drehmoments M und die Istdrehzahl nᵢₛₜ des Rotors der Asynchronmaschine AM zugeordnet sind. Die erste Ermittlungseinheit B1 ist ausgebildet, abhängig von den Eingangsgrößen einen ersten Modulationsgrad m₁ zu ermitteln. Die Ermittlung des ersten Modulationsgrades m₁ erfolgt bevorzugt derart, dass bei einem Betrieb der Asynchronmaschine AM mit dem vorgegebenen Drehmoment M der Wirkungsgrad möglichst groß, insbesondere maximal, ist. Die erste Ermittlungseinheit B1 ist ferner ausgebildet, abhängig von dem ersten Modulationsgrad m₁ einen zweiten Modulationsgrad m₂ zu ermitteln. Dabei unterscheidet sich der Wert des ersten Modulationsgrades m₁ vorzugsweise von dem Wert des zweiten Modulationsgrades m₂, wobei es grundsätzlich auch möglich ist, dass der ermittelte Wert des zweiten Modulationsgrades m₂ gleich dem Wert des ersten Modulationsgrades m₁ ist. Die erste Ermittlungseinheit B1 kann ferner einen Speicher aufweisen, in dem ein zuvor ermittelter zweiter Modulationsgrad m_{2_prev} gespeichert ist. Dabei kann die erste Ermittlungseinheit B1 ausgebildet sein, abhängig von dem in dem Speicher gespeicherten zweiten Modulationsgrad m_{2_prev} einen neuen zweiten Modulationsgrad m₂ zu ermitteln. Dadurch wird eine Hysterese bezüglich der Ermittlung des zweiten Modulationsgrades m₂ berücksichtigt. Dies ist insbesondere dann vorteilhaft, wenn beispielsweise dem ermittelten Wert des ersten Modulationsgrads m₁ ein möglicher erster und zweiter Wert des zweiten Modulationsgrades m₂ zugeordnet ist. Eine abwechselnde Vorgabe des zur Auswahl stehenden ersten oder zweiten Wertes des zweiten Modulationsgrades m₂ kann dadurch vermieden werden, dass der zweite Modulationsgrad m₂ abhängig von dem zuvor ermittelten zweiten Modulationsgrad m_{2_prev} ermittelt wird. Dabei wird vorzugsweise derjenige zur Auswahl stehende Wert des zweiten Modulationsgrades m₂ ausgewählt, der eine geringere Differenz zu dem Wert des zuvor ermittelten zweiten Modulationsgrades m_{2_prev} aufweist. Ist ein zweiter Modulationsgrad m₂ ermittelt, so wird dieser während der nachfolgenden Ermittlung eines neuen zweiten Modulationsgrades m₂ als zuvor ermittelter zweiter Modulationsgrad m_{2_prev} berücksichtigt.

Der zweite Modulationsgrad m₂ ist als weitere Eingangsgröße der zweiten Ermittlungseinheit B3 eingangsseitig zugeführt. Die zweite Ermittlungseinheit B3 ist ausgebildet, abhängig von den ihr zugeführten Eingangsgrößen einen Soll-Fluss *Ψₛₒₗₗ* ausgangsseitig zur Verfügung zustellen.

Die erste und zweite Ermittlungseinheit B1 und B3 umfassen vorzugsweise jeweils einen Datenspeicher. Dabei ist beispielsweise tabellarisch und/oder in Form eines Kennfeldes eine jeweilige vorgegebene Zuordnung der jeweiligen Eingangsgrößen zu dem ersten Modulationsgrad m₁ und eine Zuordnung des ermittelten ersten Modulationsgrad m₁ zu dem zweiten Modulationsgrad m₂ in dem Datenspeicher der ersten Ermittlungseinheit B1 gespeichert. In dem Datenspeicher der zweiten Ermittlungseinheit B3 ist beispielsweise tabellarisch und/oder in Form eines Kennfeldes eine vorgegebene Zuordnung der jeweiligen Eingangsgrößen zu dem Soll-Fluss *Ψₛₒₗₗ* gespeichert. Die Daten, die in dem Datenspeicher der ersten und/oder zweiten Ermittlungseinheit B1 und/oder B3 gespeichert sind, können beispielsweise mittels einer Simulation ermittelt werden. Ferner ist es denkbar, die Daten in einem Testaufbau mit der Asynchronmaschine AM zu ermitteln. Grundsätzlich sind auch andere Arten der Ermittlung der jeweiligen Ausgangsgrößen denkbar.

Ein Verknüpfungspunkt VK2 ist in der Betriebsvorrichtung OPU1 vorgesehen, in dem eine Differenz zwischen dem Soll-Fluss *Ψₛₒₗₗ* und dem Ist-Fluss *Ψᵢₛₜ* gebildet wird, wobei diese Differenz als Regeldifferenz einem Block B5 zugeführt ist, der bevorzugt einen PI-Regler umfasst. Ausgangsseitig erzeugt der PI-Regler einen Istwert idᵢₛₜ einer drehfeldbildenden Stromkomponente id des d,q-Koordinatensystems. Der drehfeldbildende Strom id kann auch als d-Motorstrom bezeichnet werden.

Ein weiterer Verknüpfungspunkt VK3 ist in der Betriebsvorrichtung OPU1 vorgesehen, in dem eine Differenz zwischen dem Sollwert idₛₒₗₗ und einem Istwert idᵢₛₜ des d-Motorstroms gebildet wird, wobei diese Differenz dann als Regeldifferenz einem Block B7 zugeführt ist, der einen d-Regler umfasst. Der d-Regler kann beispielsweise als PI-Regler ausgebildet sein. Ausgangsseitig erzeugt der d-Regler einen Wert U_{d} einer d-Spannung, die als Stellsignal dem Block B11 zugeführt ist.

Die Betriebsvorrichtung OPU1 umfasst des Weiteren einen Block B13, der den Istwert iqᵢₛₜ des q-Motorstroms und den Istwert idᵢₛₜ des d-Motorstroms ausgangsseitig zur Verfügung stellt. Der Block B13 ist als erster Transformationsblock ausgebildet zum Durchführen einer Park- und Clarke-Transformation und so eine entsprechende Transformation von erfassten Strangströmen i_{R}, i_{S}, i_{T} in die entsprechenden q- und d-Motorströme des d,q-Koordinatensystems durchzuführen. Das d,q-Koordinatensystem zeichnet sich dadurch aus, dass die entsprechenden transformierten Motorströme und Spannungen bei Kenntnis von exakten Drehwinkeln Φ bei einem stationären Betrieb der Asynchronmaschine AM zeitinvariant sind.

Die Betriebsvorrichtung OPU1 umfasst ferner den Block B11, dem der Wert Uq der q-Spannung als erstes Stellsignal und der Wert U_{d} der d-Spannung als zweites Stellsignal eingangsseitig zugeführt sind. Der Block B11 ist als zweiter Transformationsblock ausgebildet, eine inverse Park- und Clarke-Transformation auszuführen und so eine entsprechende Transformation der q- und d-Spannung des q,d-Koordinatensystems in entsprechende r,s,t-Koordinaten durchzuführen und so zur Vorgabe korrespondierender Zwischenspannungen U_{R}, U_{S}, U_{T} dient. Die Zwischenspannungen U_{R}, U_{S}, U_{T} werden einer Modulationseinheit, die in dem Stellglied B15 integriert ist, eingangsseitig zugeführt. Die Modulationseinheit ist vorzugsweise ausgebildet, eine Sinus-Dreieck-Modulation auszuführen. Grundsätzlich sind auch andere Modulationen verwendbar, so z.B. eine Raumzeigermodulation. Abhängig von der verwendeten Modulation werden der erste und zweite Teilumrichter des Stellgliedes B15 angesteuert.

In Figur 3 ist ein Ausschnitt der Sinus-Dreieck-Modulation, wie sie von der Modulationseinheit des Stellgliedes B15 ausgeführt wird, dargestellt. Die in Figur 3 dargestellte Sinus-Dreieck-Modulation ist der ersten Statorwicklung W1 zugeordnet. Neben einer ersten Dreieckspannung U_{TRI_1} sind die Verläufe der drei sinusförmigen, um 120° phasenverschobenen Zwischenspannungen U_{R}, U_{S}, U_{T} dargestellt. Schneidet der jeweilige Verlauf der Zwischenspannung U_{R}, U_{S}, U_{T} den Verlauf der ersten Dreieckspannung U_{TRI_1,} wird der erste Teilumrichter entsprechend angesteuert, um ausgangsseitig erste Strangspannungen U_{SR1}, U_{SS1}, U_{ST1} entsprechend der Figur 3 der ersten Statorwicklung W1 der Asynchronmaschine AM zur Verfügung zu stellen. Eine Sinus-Dreieck-Modulation für die zweite Statorwicklung W2 ist analog ausgebildet, mit dem Unterschied, dass ein Verlauf einer zweiten Dreieckspannung phasenverschoben zu dem Verlauf der ersten Dreieckspannung U_{TRI_1} ist.

Abhängig von dem Verlauf der ersten Strangspannungen U_{SR1}, U_{SS1}, U_{ST1} ergibt sich gemäß Figur 3 ein Verlauf des ersten Stroms I_{MOT1}, der von dem Zwischenkreis ZK dem ersten Teilumrichter zur Verfügung gestellt wird. Strompulse des ersten Stroms I_{MOT1} sind vorwiegend Leiterspannungen zugeordnet, wobei die Leiterspannungen aus Spannungsdifferenzen zwischen den drei ersten Strangspannungen U_{SR1}, U_{SS1}, U_{ST1} resultieren. Der erste Strom I_{MOT1} ist der ersten Statorwicklung W1 zugeordnet. Ein Verlauf eines zweiten Stroms I_{MOT2} ist analog zu dem ersten Stromverlauf I_{MOT1} ausgebildet und der zweiten Statorwicklung W2 zugeordnet. Der Verlauf des zweiten Stroms I_{MOT2} ist phasenverschoben zu dem Verlauf des ersten Stroms I_{MOT1}, entsprechend der Phasenverschiebung zwischen der ersten und zweiten Dreiecksspannung.

Ein Modulationsgrad, so z.B. der zweite Modulationsgrad m₂, repräsentiert vorzugsweise ein Verhältnis einer Amplitude U_{AMP} der Zwischenspannungen U_{R}, U_{S}, U_{T} zu dem Wert der Zwischenkreisspannung U_{ZK}. Die Zwischenkreisspannung U_{ZK} kann als näherungsweise konstant angesehen werden. Einer Vergrößerung des zweiten Modulationsgrades m₂ ist vorzugsweise eine Vergrößerung der Amplitude U_{AMP} der Zwischenspannungen U_{R}, U_{S}, U_{T} zugeordnet. Der Vergrößerung der Amplitude U_{AMP} der Zwischenspannungen U_{R}, U_{S}, U_{T} sind wiederum veränderte Pulsbreiten der ersten und zweiten Strangspannungen U_{SR1}, U_{SS1}, U_{ST1} zugeordnet. Dies führt wiederum zu einer Vergrößerung der Pulsbreiten des ersten und zweiten Stroms I_{MOT1} und I_{MOT2}. Einer Verringerung des zweiten Modulationsgrades m₂ ist vorzugsweise eine Verringerung der Pulsbreiten des ersten und zweiten Stroms I_{MOT1} und I_{MOT2} zugeordnet.

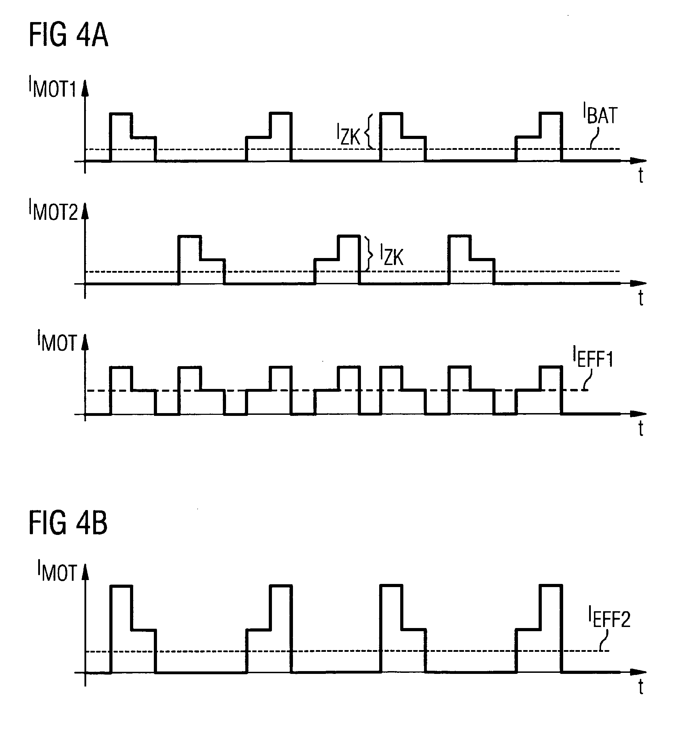

In Figur 4a ist ein Verlauf des ersten und zweiten Stromes I_{MOT1} und I_{MOT2} dargestellt. Der erste und zweite Strom I_{MOT1} und I_{MOT2} werden von dem Zwischenkreis ZK als ein aus dem ersten und zweiten Strom I_{MOT1} und I_{MOT2} resultierender Zwischenkreisstrom I_{MOT} dem Stellglied B15 zur Verfügung gestellt. Ein Batteriestrom I_{BAT} stellt einen Mittelwert eines Stromes dar, der von der Versorgungsspannung U_{BAT} zum Betreiben der Asynchronmaschine AM dem ersten und zweiten Teilumrichter zur Verfügung gestellt wird. Eine Stromdifferenz zwischen dem Verlauf des Batteriestroms I_{BAT} und einem Maximum des ersten oder zweiten Stroms I_{MOT1} und I_{MOT2} wird von dem Zwischenkreiskondensator C_{ZK} als Kondensatorstrom I_{CZK} zur Verfügung gestellt. D.h. je größer die Stromdifferenz ist, desto größer ist die Belastung des Zwischenkreiskondensators C_{ZK}, wobei sich eine hohe Belastung des Zwischenkreiskondensators C_{ZK} beispielsweise durch eine starke Erwärmung und eine daraus resultierende verringerte mögliche Betriebsdauer des Zwischenkreiskondensators C_{ZK} bemerkbar macht. Durch eine Variation des zweiten Modulationsgrades m₂ können vorzugsweise die Pulsbreiten der Strompulse des ersten und zweiten Stromes I_{MOT1} und I_{MOT2} verändert werden. Dabei wird der zweite Modulationsgrad m₂ derart vorgegeben, dass ein Effektivwert I_{EFF1} des Zwischenkreisstromes I_{MOT} möglichst gering ist, insbesondere minimal, ist. Idealerweise resultieren aus der Variation des zweiten Modulationsgrades m₂ Strompulse des ersten und zweiten Stromes I_{MOT1} und I_{MOT2}, die zeitlich aneinander gereiht sind oder sich zeitlich überlappen. Dabei ist allerdings als Nebenbedingung zu berücksichtigen, dass der resultierende Zwischenkreisstrom I_{MOT} derart ausgebildet ist, dass ein vorgegebener Betriebszustand der Asynchronmaschine AM, so z.B. eine Bereitstellung des vorgegebenen Drehmoments M, gewährleistet ist. Dabei ergibt sich der vorgegebene Betriebszustand vorzugsweise durch einen im Wesentlichen gleichen Ist- und Sollwert der Betriebsgröße, so z.B. dem Drehmoment M.

In Figur 4b ist zum Vergleich eine zeitliche Darstellung eines Zwischenkreisstromes I_{MOT} dargestellt, der einem Betrieb einer Asynchronmaschine mit nur einer Statorwicklung zugeordnet ist. Hier weisen die einzelnen Strompulse jeweils höhere Stromwerte und größere zeitliche Abstände zueinander auf. Ein aus diesem Stromverlauf resultierender Effektivwert I_{EFF2} des Zwischenkreisstromes I_{MOT} würde einen höheren Wert aufweisen im Vergleich zu dem Effektivwert I_{EFF1}, der aus dem in Figur 4a dargestellten Verlauf des Zwischenkreisstromes _{IMOT} resultiert. Die Stromdifferenz zwischen dem Batteriestrom I_{BAT} und dem Maximum des Zwischenkreisstromes I_{MOT} in Figur 4b ist im Vergleich zu der Stromdifferenz bei mehreren Statorwicklung gemäß der Figur 4a relativ groß und somit auch eine Belastung des Zwischenkreiskondensators C_{ZK}.

Die jeweiligen ermittelten Werte des zweiten Modulationsgrades m₂ unterscheiden sich vorzugsweise von den jeweiligen ermittelten Werten des ersten Modulationsgrades m₁. Das hat zur Folge, dass bei einer Vorgabe des Sollwertes des Drehmomentes M ein aus dem zweiten Modulationsgrad m₂ resultierender Sollwert idₛₒₗₗ des d-Motorstromes sich von dem Sollwert idₛₒₗₗ des d-Motorstroms, der aus dem ersten Modulationsgrad m₁ resultieren würde, unterscheidet, wobei auch aus der Vorgabe des ersten Modulationsgrades m₁ das vorgegebene Drehmoment M am Rotor resultieren würde.

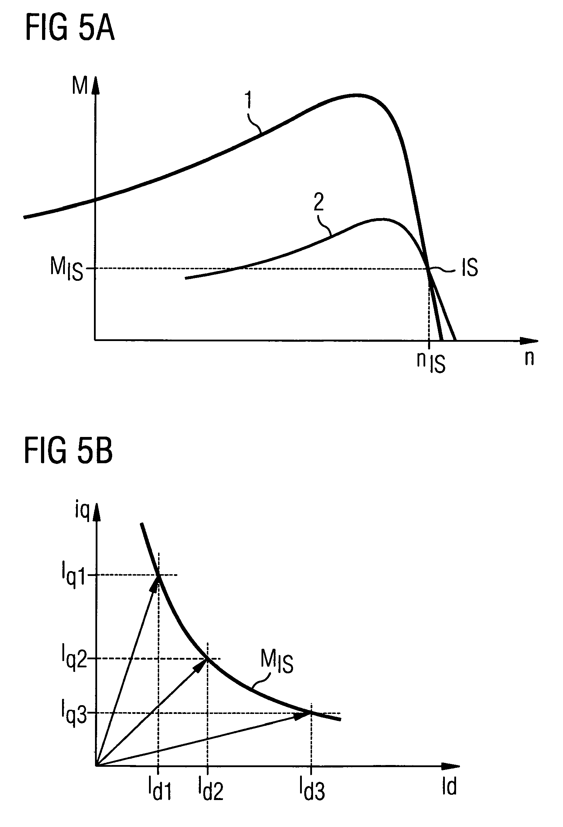

Die Asynchronmaschine M ist ausgebildet, auch bei unterschiedlichen vorgegebenen Ansteuerungen der Asynchronmaschine AM, beispielweise das vorgegebene Drehmoment M am Rotor bereitzustellen. In Figur 5a sind zwei Drehmoment-Drehzahlkennlinien der Asynchronmaschine AM dargestellt. Einer ersten Ansteuerung der Asynchronmaschine AM ist eine erste Kennlinie 1 und einer zweiten Ansteuerung der Asynchronmaschine AM ist eine zweite Kennlinie 2 zugeordnet. Beide Kennlinien 1 und 2 schneiden sich in einem Schnittpunkt IS, dem eine gemeinsame Drehzahl n_{IS} und ein gemeinsames Drehmoment M_{IS} zugeordnet ist. Beispielsweise könnte der zweiten Kennlinie 2 der erste Modulationsgrad m₁ zugeordnet sein und der ersten Kennlinie 1 könnte der zweite Modulationsgrad m₂ zugeordnet sein.

In Figur 5b ist ein Zusammenhang des d-Motorstroms id zu dem q-Motorstrom iq für das gemeinsame Drehmoment M_{IS} dargestellt. Danach resultiert aus einem ersten d-Motorstrom id1 und einem dazugehörigen ersten q-Motorstrom iq1 das gemeinsame Drehmoment M_{IS}. Genauso ist beispielsweise einem zweiten d-Motorstrom id2 und einem dazugehörigen zweiten q-Motorstrom iq2 das gemeinsame Drehmoment M_{IS} zugeordnet. Auch aus beispielsweise einem dritten d-Motorstrom id3 und einem dazugehörigen dritten q-Motorstrom iq3 resultiert das gemeinsame Drehmoment M_{IS}.

Abhängig von dem Sollwert des Drehmoments M und dem diesem Sollwert zugeordneten zweiten Modulationsgrad m₂ wird ein Sollwert idₛₒₗₗ des d-Motorstroms vorgegeben. Gemäß dem Zusammenhang aus Figur 5b ist diesem vorgegebenen Sollwert idₛₒₗₗ des d-Motorstroms ein entsprechender Sollwert iqₛₒₗₗ des q-Motorstroms zugeordnet, um das vorgegebene Drehmoment M bereitstellen zu können. Der Sollwert iqₛₒₗₗ des q-Motorstroms wird abhängig von dem Ist-Fluss *Ψᵢₛₜ*, der mittels der Berechnungseinheit CALC vorgegeben wird, an den Sollwert idₛₒₗₗ des d-Motorstroms angepasst, damit das vorgegebene Drehmoment M am Rotor der Asynchronmaschine AM bereitgestellt wird. Dabei wird der zweite Modulationsgrad m₂ derart ermittelt, dass der Effektivwert des Zwischenkreisstroms I_{MOT} möglichst gering, insbesondere minimal, ist, unter der Berücksichtigung der Nebenbedingung, dass der Istwert des Drehmomentes M im Wesentlichen gleich seinem Sollwert ist.

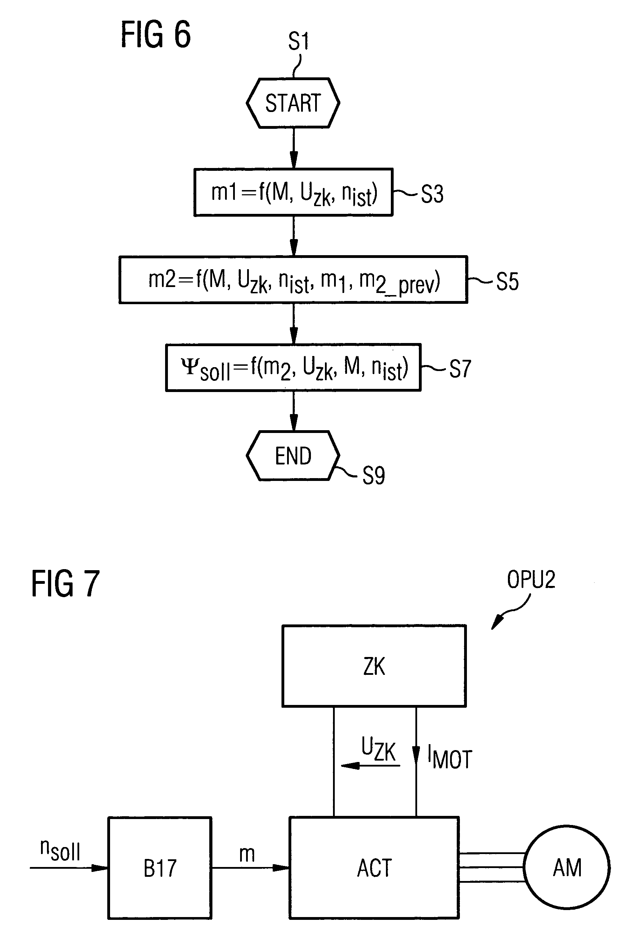

Bei dem Betrieb der Asynchronmaschine AM wird in der ersten und zweiten Ermittlungseinheit B1 und B3 ein Ablauf abgearbeitet, der im Folgenden anhand des Ablaufdiagramms der Figur 6 näher erläutert ist. Der Ablauf kann als festverdrahtete Logik aber auch in Form eines Programms vorgesehen sein, dass in einem Speicher der Betriebsvorrichtung OPU1 gespeichert ist und in einer Recheneinheit während des Betriebs abgearbeitet wird.

In einem ersten Schritt S1 erfolgt ein Start. In einem Schritt S3 wird abhängig von dem Sollwert des Drehmoments M und der Zwischenkreisspannung U_{ZK}, die beispielsweise mittels eines Spannungssensors erfasst wird, und der Istdrehzahl nᵢₛₜ der erste Modulationsgrad m₁ ermittelt. Dem ersten Modulationsgrad m₁ ist typischerweise ein Wirkungsgrad der Asynchronmaschine AM während eines Betriebes der Asynchronmaschine AM mit dem vorgegebenen Drehmoment M zugeordnet, der möglichst groß, insbesondere maximal, ist. Abhängig von dem Sollwert des Drehmoments M und der Zwischenkreisspannung U_{ZK} und der Istdrehzahl nᵢₛₜ und dem ermittelten ersten Modulationsgrad m₁ wird in einem Schritt S5 der zweite Modulationsgrad m₂ ermittelt. Der zweite Modulationsgrad m₂ wird anhand des Datenspeichers in der ersten Ermittlungseinheit B1 ermittelt, wobei die Daten in dem Datenspeicher berücksichtigen, dass bei dem Betrieb der Asynchronmaschine AM mit dem vorgegebenen Drehmoment M der Effektivwert I_{EFF1} des Zwischenkreisstromes I_{MOT} möglichst gering, insbesondere minimal, ist. Dies hat den Vorteil, dass der Kondensatorstrom I_{ZK}, den der Zwischenkreiskondensator C_{ZK} zu dem Zwischenkreisstrom I_{MOT} beisteuert, möglichst gering, insbesondere minimal, ist und der Zwischenkreiskondensator C_{ZK} somit möglichst gering belastet ist. In einem Schritt S7 wird abhängig von dem zweiten Modulationsgrad m₂ und der Zwischenkreisspannung U_{ZK} und dem Drehmoment M und der Istdrehzahl nᵢₛₜ der Soll-Fluss *Ψₛₒₗₗ* ermittelt und zur Verfügung gestellt. In einem Schritt S9 wird der Ablauf beendet. Alternativ kann der Ablauf aber auch in dem Schritt S3 erneut gestartet werden.

In Figur 7 ist eine weitere Betriebsvorrichtung OPU2 zum Betreiben der Asynchronmaschine AM, die analog zu der Figur 1 ausgebildet ist, dargestellt. Die weitere Betriebsvorrichtung OPU2 umfasst einen Block B17, der als eine dritte Ermittlungseinheit bezeichnet werden kann. Beispielsweise ist die Asynchronmaschine AM als Motor für einen Ventilator einer Lüftung eines Innenraums des Kraftfahrzeugs ausgebildet. Dabei wird der dritten Ermittlungseinheit B17 eingangsseitig eine Drehzahl n vorgegeben. Die Vorgabe der Drehzahl n der Asynchronmaschine AM erfolgt dabei vorzugsweise stufenweise. So werden beispielsweise drei Stufen unterschiedlicher Drehzahl n der weiteren Betriebsvorrichtung OPU2 vorgegeben, so z.B. eine niedrige, eine mittlere und eine hohe Drehzahl n.

Ferner weist die weitere Betriebsvorrichtung OPU2 ein weiteres Stellglied ACT auf, das analog zu dem Stellglied B15 in Figur 2 ausgebildet ist, mit dem Unterschied, dass ihm eingangsseitig der Wert eines Modulationsgrades m zugeführt ist. Ferner ist das weitere Stellglied ACT analog zu dem Stellglied B15 mit der ersten und zweiten Statorwicklung W1 und W2 der Asynchronmaschine AM elektrisch gekoppelt. Der erste und zweite Teilumrichter des weiteren Stellgliedes ACT werden analog zu der Figur 2 eingangsseitig mit der Zwischenkreisspannung U_{ZK} des Zwischenkreises ZK beaufschlagt.

Die dritte Ermittlungseinheit B17 ist ausgebildet, abhängig von der vorgegebenen Drehzahl n den Modulationsgrad m zu ermitteln und dem weiteren Stellglied ACT zur Verfügung zustellen. Die Ermittlung des Modulationsgrades m erfolgt derart, dass der Effektivwert des Zwischenkreisstromes I_{MOT} möglichst gering, insbesondere minimal, ist, mit der Nebenbedingung, dass der Istwert der Drehzahl n im Wesentlichen gleich dem vorgegebenen Wert der Drehzahl n ist. Dabei ist allerdings zu berücksichtigen, dass in Figur 7 eine Steuerung der Drehzahl der Asynchronmaschine AM dargestellt ist, und somit die Istdrehzahl des Rotors grundsätzlich von der Vorgabe der Drehzahl n abweichen kann. Diese Abweichung zwischen Istwert der Drehzahl n und der Vorgabe der Drehzahl n kann aber im Hinblick auf die Steuerung der Drehzahl n als im Wesentlich gleich bezeichnet werden.

Die Ermittlung des Modulationsgrades m kann in der dritten Ermittlungseinheit B17 beispielsweise durch eine Zuordnung des Modulationsgrades m zu der vorgegebenen Drehzahl n mittels einer vorgegebenen Tabelle und/oder mittels eines vorgegebenen Kennfeldes erfolgen, die beispielweise in einem Datenspeicher der dritten Ermittlungseinheit B17 gespeichert sind. Die Daten werden beispielsweise mittels einer Simulation oder mittels eines Testaufbaus mit der Asynchronmaschine AM ermittelt und in dem Datenspeicher abgespeichert. Das weitere Stellglied ACT ist ausgebildet, abhängig von dem vorgegebenen Modulationsgrad m die Asynchronmaschine AM derart anzusteuern, dass die vorgegebene Drehzahl n von der Asynchronmaschine AM zumindest näherungsweise bereitgestellt wird und gleichzeitig ein Effektivwert des Zwischenkreisstromes I_{MOT} möglichst gering, insbesondere minimal, ist.

## Patentansprüche

1. Verfahren zum Betreiben einer Asynchronmaschine (AM) mit einem Rotor und zumindest zwei elektrisch getrennten Statorwicklungen (W1, W2), wobei der ersten und der zweiten Statorwicklung (W1, W2) jeweils mehrere Wicklungsstränge zugeordnet sind und die erste Statorwicklung (W1) über einen ersten Teilumrichter (B15) und die zweite Statorwicklung (W2) über einen zweiten Teilumrichter (B15) jeweils mit zugehörigen Strömen (IM0T1, IM0T2) gespeist wird,
- wobei der erste und zweite Teilumrichter (B15) aus einem gemeinsamen Zwischenkreis (ZK), der einen Zwischenkreiskondensator (C_{ZK}) aufweist, mit einer Zwischenkreisspannung (U_{ZK}) beaufschlagt werden,
- bei dem ein Wert der Zwischenkreisspannung (U_{ZK}) erfasst wird,
- bei dem abhängig von dem erfassten Wert der Zwischenkreisspannung (U_{ZK}), einem Sollwert des Drehmoments (M) und der Istdrehzahl (nᵢₛₜ) der Asynchronmaschine (AM) ein erster Modulationsgrad (m₁) ermittelt wird,
- bei dem abhängig von dem Sollwert des Drehmoments (M), der Zwischenkreisspannung (U_{ZK}) und der Istdrehzahl (nᵢₛₜ) und dem ermittelten ersten Modulationsgrad (m₁) ein zweiter Modulationsgrad (m₂) zur Ansteuerung beider Teilumrichter ermittelt wird,
- bei dem abhängig von dem zweiten Modulationsgrad (m₂), der Zwischenkreisspannung (U_{ZK}), dem Drehmoment (M) und der Istdrehzahl (nᵢₛₜ) ein Soll-Fluss (ψₛₒₗₗ) zur Beeinflussung einer drehfeldbildenden Stromkomponente (id) ermittelt wird,
- wobei der zweite Modulationsgrad (m₂) derart ermittelt wird, dass aus der Ansteuerung der Asynchronmaschine (AM) durch Verändern der Pulsbreiten der Strompulse der beiden phasenverschobenen Ströme (IM0T1, IM0T2) basierend auf dem zweiten Modulationsgrad (m₂) ein Effektivwert (I_{EFF}) des Zwischenkreisstromes (I_{MOT}) resultiert, der möglichst gering, insbesondere minimal, ist,
- und zwar unter Berücksichtigung einer Nebenbedingung, dass ein Istwert des Drehmoments (M) im Wesentlichen gleich dem Sollwert des Drehmoments (M) ist.

2. Verfahren nach Anspruch 1, bei dem abhängig von einem zuvor ermittelten zweiten Modulationsgrad (m_{2_prev}) der zweite Modulationsgrad (m₂) ermittelt wird.

3. Vorrichtung zum Betreiben einer Asynchronmaschine (AM) mit einem Rotor und zumindest zwei elektrisch getrennten Statorwicklungen (W1, W2), wobei der ersten und der zweiten Statorwicklung (W1, W2) jeweils mehrere Wicklungsstränge zugeordnet sind und die erste Statorwicklung (W1) über einen ersten Teilumrichter (B15) und die zweite Statorwicklung (W2) über einen zweiten Teilumrichter (B15) jeweils mit zugehörigen Strömen (IM0T1, IM0T2) gespeist wird, wobei der erste und zweite Teilumrichter (B15) aus einem gemeinsamen Zwischenkreis (ZK), der einen Zwischenkreiskondensator (C_{ZK}) aufweist, mit einer Zwischenkreisspannung (U_{ZK}) beaufschlagt werden, wobei die Vorrichtung ausgebildet ist,
- einen Wert der Zwischenkreisspannung (U_{ZK}) zu erfassen,
- in einer ersten Ermittlungseinheit (B1) abhängig von dem erfassten Wert der Zwischenkreisspannung (U_{ZK}), einem Sollwert des Drehmoments (M) und der Istdrehzahl (nᵢₛₜ) der Asynchronmaschine (AM) einen erster Modulationsgrad (m₁) zu ermitteln,
- in einer zweiten Ermittlungseinheit (B3) abhängig von dem Sollwert des Drehmoments (M), der Zwischenkreisspannung (U_{ZK}) und der Istdrehzahl (nᵢₛₜ) und dem ermittelten ersten Modulationsgrad (m₁) einen zweiten Modulationsgrad (m₂) zur Ansteuerung beider Teilumrichter zu ermitteln,
- in der zweiten Ermittlungseinheit (B3) abhängig von dem zweiten Modulationsgrad (m₂), der Zwischenkreisspannung (U_{ZK}), dem Drehmoment (M) und der Istdrehzahl (nᵢₛₜ) einen Soll-Fluss (ψₛₒₗₗ) zur Beeinflussung einer drehfeldbildenden Stromkomponente (id) zu ermitteln,
- wobei der zweite Modulationsgrad (m₂) in der zweiten Ermittlungseinheit (B3) derart ermittelt wird, dass aus der Ansteuerung der Asynchronmaschine (AM) durch Verändern der Pulsbreiten der Strompulse der beiden phasenverschobenen Ströme (IM0T1, IM0T2) basierend auf dem zweiten Modulationsgrad (m₂) ein Effektivwert (I_{EFF}) des Zwischenkreisstromes (I_{MOT}) resultiert, der möglichst gering, insbesondere minimal, ist,
- und zwar unter Berücksichtigung einer Nebenbedingung, dass ein Istwert des Drehmoments (M) im Wesentlichen gleich dem Sollwert des Drehmoments (M) ist.

## Claims

1. Method for operating an asynchronous machine (AM) with a rotor and at least two electrically isolated stator windings (W1, W2), in each case a plurality of winding phases being assigned to the first and second stator windings (W1, W2), and in each case associated currents (I_{MOT1}, I_{MOT2}) being fed to the first stator winding (W1) via a first subconverter (B15) and to the second stator winding (W2) via a second subconverter (B15),
- an intermediate circuit voltage (U_{ZK}) being applied to the first and second subconverters (B15) from a common intermediate circuit (ZK), which has an intermediate circuit capacitor (C_{ZK}),
- in which a value of the intermediate circuit voltage (U_{ZK}) is detected,
- in which, depending on the detected value for the intermediate circuit voltage (U_{ZK}), a setpoint value for the torque (M) and the actual speed (n_{act}) of the asynchronous machine (AM), a first modulation degree (m₁) is determined,
- in which, depending on the setpoint value for the torque (M), the intermediate circuit voltage (U_{ZK}) and the actual speed (n_{act}) and the determined first modulation degree (m₁), a second modulation degree (m₂) is determined for driving both subconverters,
- in which, depending on the second modulation degree (m₂), the intermediate circuit voltage (U_{ZK}), the torque (M) and the actual speed (n_{act}), a setpoint flux (ψₛₑₜ) is determined for influencing a rotating field-forming current component (id),
- the second modulation degree (m₂) being determined in such a way that an RMS value (I_{RMS}) of the intermediate circuit current (I_{MOT}) results from the driving of the asynchronous machine (AM) by changing the pulse widths of the current pulses of the two phase-shifted currents (I_{MOT1}, I_{MOT2}) on the basis of the second modulation degree (m₂), said RMS being as low as possible, in particular being a minimum value,
- that is taking into consideration a secondary condition that an actual value of the torque (M) is substantially equal to the setpoint value of the torque (M).

2. Method according to Claim 1, in which, depending on a previously determined second modulation degree (m_{2_prev}), the second modulation degree (m₂) is determined.

3. Apparatus for operating an asynchronous machine (AM) with a rotor and at least two electrically isolated stator windings (W1, W2), in each case a plurality of winding phases being assigned to the first and second stator windings (W1, W2), and in each case associated currents (I_{MOT1}, I_{MOT2}) being fed to the first stator winding (W1) via a first subconverter (B15) and to the second stator winding (W2) via a second subconverter (B15), an intermediate circuit voltage (U_{ZK}) being applied to the first and second subconverters (B15) from a common intermediate circuit (ZK), which has an intermediate circuit capacitor (C_{ZK}), the apparatus being designed
- to detect a value of the intermediate circuit voltage (U_{ZK}),
- to determine, in a first determination unit (B1), a first modulation degree (m₁) depending on the detected value of the intermediate circuit voltage (U_{ZK}), a setpoint value of the torque (M) and the actual speed (n_{act}) of the asynchronous machine (AM),
- to determine in a second determination unit (B3), a second modulation degree (m₂) for driving both subconverters depending on the setpoint value of the torque (M), the intermediate circuit voltage (U_{ZK}) and the actual speed (n_{act}) and the determined first modulation degree (m₁),
- to determine, in the second determination unit (B3), a setpoint flux (ψₛₑₜ) for influencing a rotating field-forming current component (id) depending on the second modulation degree (m₂), the intermediate circuit voltage (U_{ZK}), the torque (M) and the actual speed (n_{act}),
- the second modulation degree (m₂) being determined in the second determination unit (B3) in such a way that an RMS value (I_{RMS}) of the intermediate circuit current (I_{MOT}) results from the driving of the asynchronous machine (AM) by changing the pulse widths of the current pulses of the two phase-shifted currents (I_{MOT1}, I_{MOT2}) on the basis of the second modulation degree (m₂), said RMS value being as low as possible, in particular being a minimum value,
- that is taking into consideration a secondary condition that an actual value of the torque (M) is substantially equal to the setpoint value of the torque (M).

## Revendications

1. Procédé pour faire fonctionner une machine asynchrone (AM) avec un rotor et au moins deux enroulements statoriques (W1, W2) séparés électriquement, dans lequel plusieurs enroulements de phase sont respectivement affectés au premier et au second enroulements statoriques (W1, W2) et le premier enroulement statorique (W1) est alimenté via un premier convertisseur partiel (B15) et le second enroulement statorique (W2) est alimenté via un second convertisseur partiel (B15) avec des courants respectivement dédiés (IMOT1, IMOT2),
- dans lequel les premier et second convertisseurs partiels (B15) sont alimentés avec une tension de circuit intermédiaire (U_{ZK}), à partir d'un circuit intermédiaire (ZK) commun présentant un condensateur de circuit intermédiaire (C_{ZK}),
- dans lequel une valeur de la tension de circuit intermédiaire (U_{ZK}) est enregistrée,
- dans lequel un premier niveau de modulation (m₁) est déterminé en fonction de la valeur enregistrée de la tension de circuit intermédiaire (U_{ZK}), d'une valeur théorique du couple de rotation (M) et de la vitesse réelle (nᵢₛₜ) de la machine asynchrone (AM),
- dans lequel un second niveau de modulation (m₂) pour le pilotage des deux convertisseurs partiels est déterminé en fonction de la valeur théorique du couple de rotation (M), de la tension de circuit intermédiaire (U_{ZK}) et de la vitesse réelle (nᵢₛₜ) et du premier niveau de modulation (m₁) déterminé,
- dans lequel un flux théorique (ψ_{Soll}) pour influer sur une composante de courant (id) formant un champ magnétique rotatif est déterminé en fonction du second niveau de modulation (m₂), de la tension de circuit intermédiaire (U_{ZK}), du couple de rotation (M) et de la vitesse réelle (nᵢₛₜ),
- dans lequel le second niveau de modulation (m₂) est déterminé de sorte qu'à partir du pilotage de la machine asynchrone (AM), en modifiant les largeurs des impulsions de courant des deux courants (IMOT1, IMOT2) déphasés sur la base du second niveau de modulation (m₂), on obtient une valeur efficace (I_{EFF}) du courant de circuit intermédiaire (I_{MOT}), qui est si possible réduite, en particulier minimale,
- et ce, en tenant compte d'une condition secondaire, selon laquelle une valeur réelle du couple de rotation (M) est sensiblement identique à la valeur théorique du couple de rotation (M).

2. Procédé selon la revendication 1, dans lequel le second niveau de modulation (m₂) est déterminé en fonction d'un second niveau de modulation déterminé auparavant (m₂_pᵣₑᵥ).

3. Dispositif pour faire fonctionner une machine asynchrone (AM) avec un rotor et au moins deux enroulements statoriques (W1, W2) séparés électriquement, dans lequel plusieurs enroulements de phase sont respectivement affectés au premier et au second enroulements statoriques (W1, W2) et le premier enroulement statorique (W1) est alimenté via un premier convertisseur partiel (B15) et le second enroulement statorique (W2) est alimenté via un second convertisseur partiel (B15) avec des courants respectivement dédiés (IMOT1, IMOT2), dans lequel les premier et second convertisseurs partiels (B15) sont alimentés avec une tension de circuit intermédiaire (U_{ZK}), à partir d'un circuit intermédiaire (ZK) commun présentant un condensateur de circuit intermédiaire (C_{ZK}), dans lequel le dispositif est conformé pour :
- enregistrer une valeur de la tension de circuit intermédiaire (U_{SK}),
- déterminer un premier niveau de modulation (m₁) dans une première unité de détermination (B1) en fonction de la valeur enregistrée de la tension de circuit intermédiaire (U_{ZK}), d'une valeur théorique du couple de rotation (M) et de la vitesse réelle (nᵢₛₜ) de la machine asynchrone (AM),
- déterminer un second niveau de modulation (m₂) pour le pilotage des deux convertisseurs partiels dans une seconde unité de détermination (B3) en fonction de la valeur théorique du couple de rotation (M), de la tension de circuit intermédiaire (U_{ZK}) et de la vitesse réelle (nᵢₛₜ) et du premier niveau de modulation (m₁) déterminé,
- déterminer un flux théorique (ψ_{Soll}) pour influer sur une composante de courant (id) formant un champ magnétique rotatif dans la seconde unité de détermination (B3) en fonction du second niveau de modulation (m₂), de la tension de circuit intermédiaire (U_{ZK}), du couple de rotation (M) et de la vitesse réelle (nᵢₛₜ),
- dans lequel le second niveau de modulation (m₂) est déterminé dans la seconde unité de détermination (B3), de sorte qu'à partir du pilotage de la machine asynchrone (AM), en modifiant les largeurs des impulsions de courant des deux courants (IMOT1, IMOT2) déphaséssurlabasedusecondniveau de modulation (m₂), on obtient une valeur efficace (I_{EFF}) du courant de circuit intermédiaire (I_{MOT}), qui est si possible réduite, en particulier minimale,
- et ce, en tenant compte d'une condition secondaire, selon laquelle une valeur réelle du couple de rotation (M) est sensiblement identique à la valeur théorique du couple de rotation (M).
